# EUROPEAN PATENT SPECIFICATION

(11) **EP 4 482 001 B1**
(45) Date of publication and mention of the grant of the patent: **10.06.2026**
(21) Application number: 22933871.0
(22) Date of filing: 19.12.2022
(51) Int. Cl.: H02K 11/25, G01K 1/14, G01K 1/143

(54) **TEMPERATURE SENSOR HOLDER AND TEMPERATURE SENSOR ATTACHMENT METHOD**
TEMPERATURSENSORHALTER UND TEMPERATURSENSORBEFESTIGUNGSVERFAHREN
SUPPORT DE CAPTEUR DE TEMPÉRATURE ET PROCÉDÉ DE FIXATION DE CAPTEUR DE TEMPÉRATURE

(30) Priority: 29.03.2022 JP 2022054249
(43) Date of publication of application: 25.12.2024
(73) Proprietor: HONDA MOTOR CO., LTD., Tokyo 105-8404 (JP)
(72) Inventor: NARITA, Yuji, Wako-shi, Saitama 351-0193 (JP); SHIRASUNA, Takamori, Wako-shi, Saitama 351-0193 (JP); KAJIHARA, Eisuke, Wako-shi, Saitama 351-0193 (JP); MATSUDAIRA, Naotada, Wako-shi, Saitama 351-0193 (JP)
(74) Representative: Kiwit, Benedikt
(86) International application number: PCT/JP2022/046744
(87) International publication number: WO 2023/188600

(56) References cited:
- EP-A2- 2 830 198
- CN-A- 104 113 165
- CN-U- 203 522 446
- JP-A- 2012 217 303
- JP-A- 2013 051 806
- JP-A- 2015 106 955
- JP-B1- 6 674 070
- US-A1- 2010 270 873

## Description

### [Technical Field]

The present invention relates to a temperature sensor holder for holding a temperature sensor and a temperature sensor mounting method for mounting a temperature sensor using the temperature sensor holder.

### [Background Art]

JP 6 484 334 B2 discloses a structure in which a temperature sensor that detects the temperature of a stator coil is mounted on a motor using a temperature sensor holder.

EP 2 830 198 A2 discloses an electric machine having an outer-rotor-type stator motor, the motor comprising a rotor and a stator with a plurality of stator teeth comprised by respective stator coils and insulating bodies. The electric machine further comprises a sensor arranged on a sensor carrier, and a connecting device with connecting conductors which are connected to winding wire ends of the stator coils. Positioning of the sensor is determined by a positive-locking arrangement of the sensor carrier on at least one of the insulating bodies, wherein the sensor carrier is held between a pair of the stator coils via a clamping element which is secured to the respective insulating body at a side thereof closest to the stator core.

The temperature sensor holder disclosed in JP 6 484 334 B2 includes a holder fixing portion and a sensor holding portion integrally formed with the holder fixing portion, the holder fixing portion being provided with two tabs that hold a flange of an insulator, the sensor holding portion being provided with a storage groove that stores a temperature sensor and a sensor pressing portion having a cantilever structure in the storage groove.

The temperature sensor holder is mounted on the insulator in such a manner that two tabs are engaged with the flange of the insulator protruding in a direction of a rotation shaft of a rotor from the direction of the rotation shaft of the rotor (a rotary drive shaft of a motor) to hold the flange between the two tabs.

In this state, the temperature sensor stored in the storage groove is held in such a manner that a temperature measuring unit is pressed against a stator coil by a spring force of the sensor pressing portion acting in the direction of the rotation shaft of the rotor.

The protruding flange of the insulator has, on its leading end, a taper and a step located below the taper. The tab of the holder fixing portion engaged with the flange is caught on the step and is less likely to be disengaged.

### [Summary of the Invention]

### [Underlying Problem to be solved by the Invention]

Therefore, when the temperature sensor holder is removed, it is necessary to bend the flange to displace the step of the flange in order to disengage the tab of the holder fixing portion of the temperature sensor holder from the step at the leading end of the flange of the insulator.

The flange of the insulator protruding in the direction of the rotation shaft of the rotor is a short protrusion, and receives a stress on a base end thereof when being bent. Thus, the flange may be damaged.

During maintenance, only the temperature sensor may be replaced. In that case, when the flange of the insulator is damaged during removal of the temperature sensor holder, the entire motor needs to be replaced, which is inefficient.

The present invention has been made in view of such circumstances, and an object of the present invention is to provide a temperature sensor holder and a temperature sensor mounting method with which it is possible to easily mount a temperature sensor without damaging an object to which the temperature sensor is mounted, etc.

### [Means to solve the Problem]

In order to achieve the above object, the present invention is laid out in the independent claims, with further advantageous embodiments being laid out in the claims dependent respectively thereon.

According to an aspect of the present invention, a temperature sensor holder is provided which is configured for mounting a temperature sensor that measures a temperature of a one of a plurality of stator coils to a motor is provided, the motor including a stator that includes the plurality of stator coils each wound around a corresponding stator core via a corresponding insulator and a rotor that holds a magnet and that is supported within the stator together with a rotary drive shaft in a rotatable manner, the temperature sensor holder including:
a sensor holding portion that is configured to hold the temperature sensor;
a pair of holder engagement portions engaged with the motor; and
a pair of arms each having a corresponding curved portion connecting the sensor holding portion and the corresponding holder engagement portion, wherein
each of the insulators includes a cylindrical portion located between the corresponding stator core and the corresponding stator coil, and has an outer flange formed along the corresponding stator coil at an opening end of the corresponding cylindrical portion on a radially outer side of the stator,
the arms extend from the sensor holding portion respectively in a circumferential direction of the stator opposite to each other, and
the temperature sensor holder is mounted on the outer flange from a radially outer side of the stator, with the holder engagement portions provided at circumferentially outer ends of the corresponding arms, each being engaged with a corresponding end of the outer flange.

With this configuration, the temperature sensor holder can be mounted on the object in such a manner that the holder engagement portion is engaged with the object due to elastic force of the curved portion of the arm, and at the same time, the sensor holding portion brings the temperature sensor in pressure contact with the measured portion, whereby the temperature sensor can be brought into pressure contact with the measured portion. Thus, the temperature of the measured portion can be accurately measured.

The holder engagement portion can be disengaged from the object by elastically deforming the curved shape of the curved portion of the arm. Thus, the temperature sensor holder can be easily removed from the object.

The curved shape of the curved portion of the arm is deformed to mount and remove the temperature sensor holder, and thus, stress is distributed without concentration. Therefore, the temperature sensor holder is not damaged, and further, the object is not damaged.

Another aspect of the present invention provides
a temperature sensor mounting method for mounting a temperature sensor, using a temperature sensor holder for mounting the temperature sensor that measures a temperature of one of a plurality of stator coils of a motor to the motor, the temperature sensor holder including a sensor holding portion that holds the temperature sensor, a pair of holder engagement portions to be engaged with the motor, and a pair of arms each having a corresponding curved portion connecting the sensor holding portion and the corresponding holder engagement portion,
the motor including: a stator that includes the plurality of stator coils each wound around a corresponding stator core via a corresponding insulator; and a rotor that holds a magnet and that is supported within the stator together with a rotary drive shaft in a rotatable manner, the stator being formed in an annular shape by arranging the plurality of stator coils in a circumferential direction each of the curved portions of the arms being curved so as to project in a radial outward direction of the stator, the temperature sensor mounting method including
engaging each of the holder engagement portions with the corresponding insulator by an elastic force of the curved portion of the corresponding arm of the temperature sensor holder, and at the same time, bringing the temperature sensor into pressure contact with the corresponding stator coil by the sensor holding portion to mount the temperature sensor holder to the corresponding insulator.

With this configuration, the temperature sensor holder can be mounted on the insulator of the motor in such a manner that the holder engagement portion is engaged with the insulator due to elastic force of the curved portion of the arm, and at the same time, the sensor holding portion brings the temperature sensor in pressure contact with the stator coil. Therefore, the load on the temperature sensor due to vibration can be absorbed by the elastic deformation of the curved portion of the arm, whereby the pressure contact of the temperature sensor with the stator coil by the sensor holding portion can be constantly maintained, whereby the temperature of the stator coil can be constantly and stably measured.

The holder engagement portion can be disengaged from the insulator by elastically deforming the curved shape of the curved portion of the arm. Thus, the temperature sensor holder can be easily removed from the insulator.

The curved shape of the curved portion of the arm is deformed to mount and remove the temperature sensor holder, and thus, stress is distributed without concentration. Therefore, the temperature sensor holder is not damaged.

In addition, the insulator of the motor is not deformed and is not damaged.

In a preferred embodiment of the present invention,
each of the holder engagement portion includes an engagement tab that protrudes, and
the engagement tab is engaged with an end of the corresponding insulator.

With this configuration, the protruding engagement tab of the holder engagement portion is engaged with the end of the insulator. That is, the protruding engagement tab is engaged in a state of being hooked on the end of the insulator, whereby the engagement tab is easily engaged and disengaged. That is, the temperature sensor holder is easily mounted and removed.

In a preferred embodiment of the present invention,
each of the holder engagement portions includes a protruding piece formed closer to the corresponding arm relative to the engagement tab, the protruding piece protruding in a direction same as the engagement tab, and
the engagement tab is engaged with an end of the corresponding insulator positioned between the engagement tab and the protruding piece.

With this configuration, the engagement tab is engaged with the end of the insulator positioned between the engagement tab and the protruding piece protruding in the same direction. Therefore, even when the arm is deformed to open the curved portion by vibration of the motor, the protruding piece comes in contact with the end of the insulator and serves as a stopper, and thus, the end of the insulator is prevented from coming off from between the protruding piece and the engagement tab. Accordingly, the temperature sensor holder is prevented from being disengaged from the insulator.

In a preferred embodiment of the present invention,
the arms extend from the sensor holding portion of the temperature sensor holder, respectively, in directions opposite to each other, and each of the holder engagement portions is provided at an outer end of the corresponding arm.

With this configuration, the sensor holding portion at the center presses the temperature sensor against the stator coil by the elastic force of the curved portions of the arms on both sides of the sensor holding portion, so that the temperature sensor can be stably pressed against the stator coil in a well-balanced manner.

In addition, when the temperature sensor holder is removed from the insulator, the curved portions of the arms on both sides are elastically deformed. Therefore, only small deformation of the curved portions of the arms is required, and thus, the temperature sensor holder is not damaged.

In a preferred embodiment of the present invention,
the engagement tab of at least one of the pair of holder engagement portions has an inclined surface tapered toward a leading end in a direction perpendicular to a protruding direction of the engagement tab.

With this configuration, the engagement tab of at least one of the pair of holder engagement portions has the inclined surface tapered toward the leading end in the direction perpendicular to the protruding direction thereof. Therefore, when the inclined surface of the engagement tab is pressed against the end of the insulator, the curved portion of the arm is elastically deformed, the position of the engagement tab is changed while the end of the insulator slides on the inclined surface of the engagement tab, and the engagement tab can be engaged with the end of the insulator by the elastic restoring force of the curved portion of the arm after the engagement tab climbs over the end face of the insulator.

Therefore, the temperature sensor holder can be smoothly mounted on the insulator.

In the present invention according to the second aspect,
each of the insulators includes a cylindrical portion located between the corresponding stator core and the corresponding stator coil, and has an outer flange formed along the corresponding stator coil at an opening end of the corresponding cylindrical portion on a radially outer side of the stator, and
the temperature sensor holder is mounted on the outer flange from a radially outer side of the stator, with the corresponding holder engagement portion being engaged with an end of the outer flange.

With this configuration, the temperature sensor holder can be mounted on the outer flange of the insulator formed on the outside of the stator in the radial direction from the radially outer side of the stator with the holder engagement portion being engaged with the end of the outer flange, whereby the temperature sensor holder does not interfere with the insertion of the rotor within the stator.

In addition, it is possible to prevent the temperature sensor holder from protruding from the stator coil in the axial direction.

In a preferred embodiment of the present invention,
the outer flange of each of the insulators is formed with a positioning protrusion that protrudes outward in the radial direction of the stator and restricts movement of the temperature sensor holder in the axial direction of the rotary drive shaft.

With this configuration, the outer flange of each of the insulators is provided with the positioning protrusion that protrudes radially outward of the stator and restricts the movement of the temperature sensor holder in the axial direction of the rotary drive shaft, so that the temperature sensor holder can be prevented from being disengaged even when the motor receives impact or vibration in the axial direction of the rotary drive shaft.

In a preferred embodiment of the present invention,
the outer flange of each of the insulators has an opening through which the stator coil is exposed, and
when the temperature sensor holder is mounted on the outer flange, the temperature sensor held by the sensor holding portion enters the opening and is brought into pressure contact with the stator coil.

With this configuration, when the opening through which the stator coil is exposed is formed in the outer flange of each of the insulators and the temperature sensor holder is mounted on the outer flange, the temperature sensor held by the sensor holding portion enters the opening and is brought into pressure contact with the stator coil, so that a simple and compact temperature sensor mounting structure can be obtained.

In a preferred embodiment of the present invention,
the curved portion of each of the arms of the temperature sensor holder is curved so as to project outward in the radial direction of the stator, and
the temperature sensor held by the sensor holding portion is brought into pressure contact with the stator coil by an elastic force of the curved portion of each of the arms toward inside of the stator in the radial direction.

With this configuration, the curved portion of the arm of the temperature sensor holder is curved so as to project outward in the radial direction of the stator, and the temperature sensor held by the sensor holding portion is brought into pressure contact with the stator coil by the elastic force of the curved portion of the arm toward the inside of the stator in the radial direction. Therefore, even when the motor receives vibration of the stator in the radial direction, the temperature sensor can be constantly brought into pressure contact with the stator coil following the vibration by the elastic deformation of the curved portion of the arm that is curved so as to project outward in the radial direction of the stator.

In a preferred embodiment of the present invention,
the motor is mounted on a vehicle with the rotary drive shaft being oriented in a horizontal direction.

With this configuration, the motor is mounted on the vehicle with the rotary drive shaft being oriented in the horizontal direction. Therefore, the vibration in the vertical direction accompanying the traveling of the vehicle is the vibration of the stator of the motor in the radial direction, and thus, the elastic deformation of the curved portion projecting in the radial direction of the arm effectively acts, so that the temperature sensor can be constantly pressed against the stator coil following the vibration in the vertical direction.

### [Advantageous Effects of the Invention]

With the first aspect of the present invention, the temperature sensor holder can be mounted on the object in such a manner that the holder engagement portion is engaged with the object due to elastic force of the curved portion of the arm, and at the same time, the sensor holding portion brings the temperature sensor in pressure contact with the measured portion, whereby the temperature sensor can be brought into pressure contact with the measured portion. Thus, the temperature of the measured portion can be accurately measured.

The holder engagement portion can be disengaged from the object by elastically deforming the curved shape of the curved portion of the arm. Thus, the temperature sensor holder can be easily removed from the object.

The curved shape of the curved portion of the arm is deformed to mount and remove the temperature sensor holder, and thus, stress is distributed without concentration. Therefore, the temperature sensor holder is not damaged, and further, the object is not damaged.

With the second aspect of the present invention, the temperature sensor holder can be mounted on the insulator of the motor in such a manner that the holder engagement portion is engaged with the insulator due to elastic force of the curved portion of the arm, and at the same time, the sensor holding portion brings the temperature sensor in pressure contact with the stator coil. Therefore, the load on the temperature sensor due to vibration can be absorbed by the elastic deformation of the curved portion of the arm, whereby the pressure contact of the temperature sensor with the stator coil by the sensor holding portion can be constantly maintained, whereby the temperature of the stator coil can be constantly and stably measured.

The holder engagement portion can be disengaged from the insulator by elastically deforming the curved shape of the curved portion of the arm. Thus, the temperature sensor holder can be easily removed from the insulator.

The curved shape of the curved portion of the arm is deformed to mount and remove the temperature sensor holder, and thus, stress is distributed without concentration. Therefore, the temperature sensor holder is not damaged.

In addition, the insulator of the motor is not deformed and is not damaged.

### [Brief Description of Drawings]

Fig. 1 is a left side view of a motorcycle according to an embodiment of the present invention.
Fig. 2 is a left side view of a rear part of the motorcycle.
Fig. 3 is a left side view of the motorcycle from which an arm cover of a swing frame and a motor cover are removed.
Fig. 4 is a cross-sectional view of a motor mounted on the motorcycle taken along line IV-IV in Fig. 2.
Fig. 5 is a left side view of the motor.
Fig. 6 is a partial perspective view of the motor.
Fig. 7 is a perspective view of a temperature sensor holder holding a temperature sensor.
Fig. 8 is a perspective view illustrating a state in which the temperature sensor holder is being mounted on a flange of an insulator.
Fig. 9 is a left side view of the temperature sensor holder mounted on the flange of the insulator.

### [Modes for carrying out the Invention]

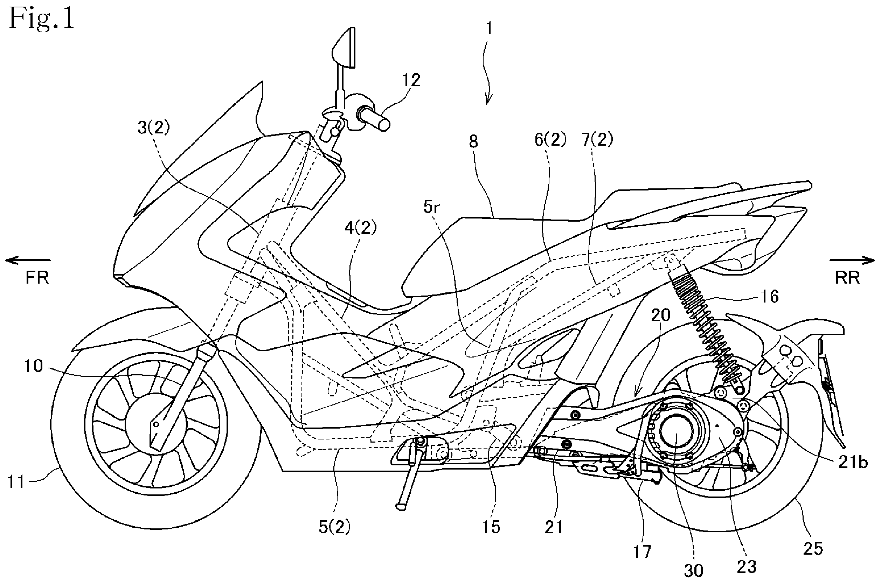

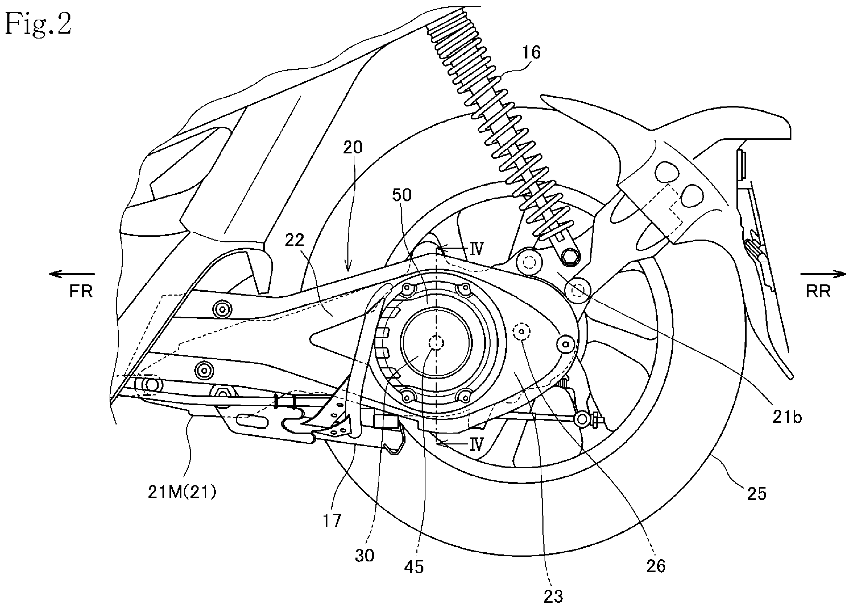

Hereinafter, an embodiment according to the present invention will be described with reference to Figs. 1 to 9.

Fig. 1 is a left side view of a motorcycle 1 that is a straddled vehicle according to an embodiment to which the present invention is applied.

In the description of the present specification, the front, rear, left, and right directions follow a normal standard in which a straight traveling direction of the motorcycle 1 according to the present embodiment is a forward direction, and in the drawings, an arrow FR indicates a forward direction, an arrow RR indicates a rearward direction, an arrow LH indicates a leftward direction, and an arrow RH indicates a rightward direction.

The motorcycle 1 is a unit swing type motorcycle.

In Fig. 1, a vehicle body frame 2 of the motorcycle 1 includes a head pipe 3 rotatably supporting a front fork 10, a main frame 4 extending rearward and downward from the head pipe 3, a pair of left and right down frames 5 each of which extends downward from a lower part of the head pipe 3, is bent at a lower end to extend rearward, and then extends rearward and upward in an oblique manner, and a pair of left and right seat rails 6 each of which extends rearward and upward in an oblique manner from a middle part of the main frame 4. The rear end of the main frame 4 is connected to lower parts of rear portions 5r extending rearward and upward in an oblique manner of the down frames 5, and the upper ends of the rear portions 5r are connected to the seat rails 6.

A back stay 7 connects the rear portions 5r of the down frames 5 and the seat rails 6 to each other to support the seat rails 6.

A seat 8 is supported by the seat rails 6.

A front wheel 11 is rotatably supported at a lower end of the front fork 10 supported by the head pipe 3, and a steering handlebar 12 is mounted at an upper end of a pivot of the front fork 10.

A front end of a swing frame 21, which is a supporting body of a power unit 20, is connected to the lower parts of the rear portions 5r of the down frames 5 via a link mechanism 15, and the power unit 20 can swing up and down integrally with the swing frame 21.

A rear wheel 25 is pivotally supported at a rear end of the swing frame 21.

A rear cushion 16 is interposed between a bracket 21b protruding rearward of the swing frame 21 and the seat rails 6.

The swing frame 21 includes a main arm 21M extending from the front of the rear wheel 25 to the left side of the rear wheel 25, and a sub arm (not illustrated) extending from a front right side of the main arm 21M to the right side of the rear wheel 25.

A stand 17 is mounted at a lower part of the swing frame 21 so as to be retractable.

The power unit 20 is configured in such a manner that the motor 30 is mounted on the left side of a rear part of the main arm 21M, a power transmission mechanism 23 is mounted on the right side of the rear part of the main arm 21M, and a rear axle 26 of the rear wheel 25 is pivotally supported at a rear end of the main arm 21M, so that rotation of a rotary drive shaft 45 which is an output shaft of the motor 30 is transmitted to the rear wheel 25 via the power transmission mechanism 23.

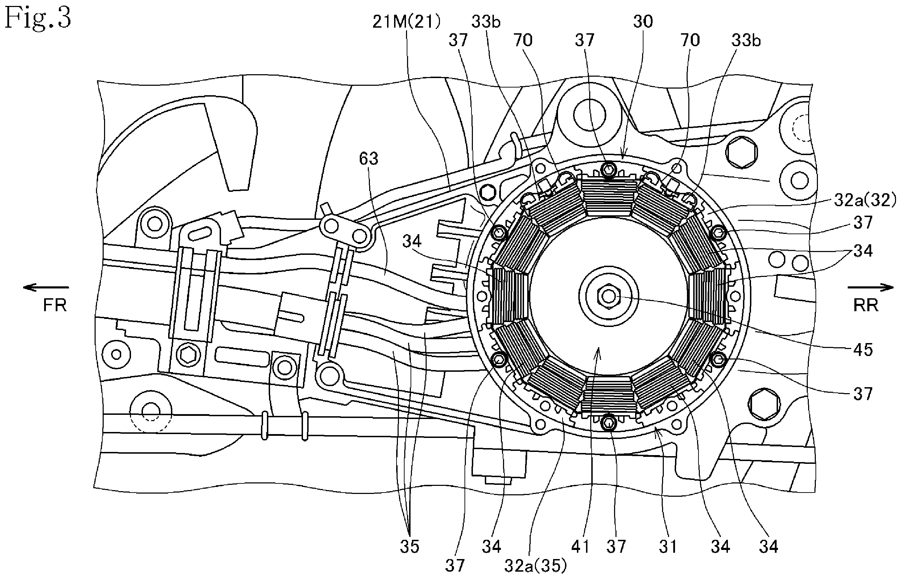

As illustrated in Fig. 3, the motor 30 is disposed in a rear part of a left opening of the main arm 21M that is elongated in a front-rear direction with the rotary drive shaft 45 of the motor 30 being oriented in a vehicle width direction.

The motor 30 is covered with a bottomed cylindrical motor cover 50 from an outer side (left side) in an axial direction of the rotary drive shaft 45 which is a motor output shaft.

The left opening of the main arm 21M which is elongated in the front-rear direction is covered with an arm cover 22 except for the motor cover 50.

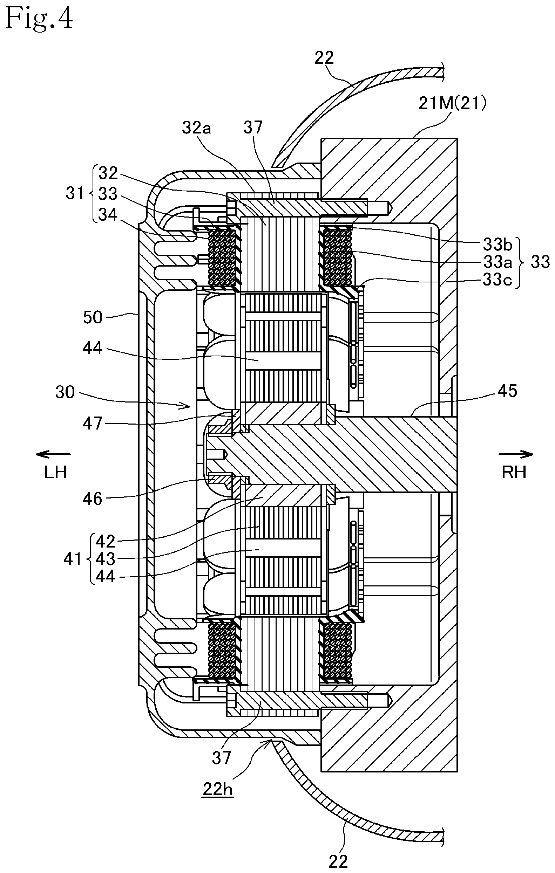

The arm cover 22 has an opening 22h formed in a portion corresponding to the bottomed cylindrical motor cover 50, and the motor cover 50 protrudes leftward from the opening 22h when the arm cover 22 is placed in the left opening of the main arm 21M (see Fig. 4).

Referring to Figs. 3 to 5, the motor 30 is an inner rotor AC electric motor.

A rotor 41 is inserted inside a stator 31 formed in an annular shape.

The stator 31 is of a split core type, and a stator coil 34 is wound around each of a plurality of stator cores 32 which is divided and arranged radially in a circumferential direction via a bobbin-shaped insulator 33 which is a resin insulator.

Therefore, the stator 31 is formed in an annular shape by arranging, in the circumferential direction, a plurality of stator coils 34 respectively wound around the stator cores 32 that are radially arranged.

Each of the stator cores 32 has an outer arc-shaped end part 32a protruding outward from the insulator 33 in a radial direction to form an arc shape, and the outer arc-shaped end parts 32a of the adjacent stator cores 32 are coupled to each other to form an annular shape as a whole.

As illustrated in Fig. 4, the stator 31 is fixed to the main arm 21M by fastening the outer arc-shaped end parts 32a of the stator cores 32 to the main arm 21M with bolts 37.

The outer arc-shaped end parts 32a of the stator cores 32 formed in an annular shape are fastened to the main arm 21M by the bolts 37 at six locations in the circumferential direction (see Fig. 3).

The rotor 41 is provided inside and at the center of the stator 31, which is annularly formed, with the rotary drive shaft 45 as a central axis.

Referring to Fig. 4, the rotor 41 includes an annular rotor core 43 that is fitted to an end of the rotary drive shaft 45 via a cylindrical boss portion 42, and magnets 44 that are fitted in the rotor core 43 at intervals in the circumferential direction.

The rotary drive shaft 45 is pivotally supported by the main arm 21M in a rotatable manner while being oriented in the horizontal vehicle width direction, and serves as an input shaft of the power transmission mechanism 23 mounted on the right side of the main arm 21M, and the rotor 41 is fitted and fixed to a protruding portion of the rotary drive shaft 45 on the left side of the main arm 21M.

Referring to Fig. 4, a male thread is formed at a left end of the rotary drive shaft 45, and the cylindrical boss portion 42 of the fitted rotor 41 is tightened by a nut 46 screwed onto the male thread via a washer 47 to integrally fasten the rotor 41 to the rotary drive shaft 45.

Therefore, the rotor 41 integrally rotates with the rotary drive shaft 45 by driving the motor 30, and the rotation of the rotary drive shaft 45 is transmitted to the rear axle 26 via the power transmission mechanism 23 to rotate the rear wheel 25. Thus, the motorcycle 1 travels.

The motor 30 is a three-phase AC electric motor, and as illustrated in Fig. 3, three three-phase electric wires 35 extend forward from the stator coils 34 of the stator 31 along the surface of the left opening of the main arm 21M.

Although not illustrated, an inverter converts DC power from a battery into three-phase AC power, and the three-phase AC power is supplied to the stator coils 34 of the motor 30 by the three-phase electric wires 35 to drive the motor 30.

The insulator 33 made of a resin material in the stator 31 of the motor 30 having the above-described structure has a bobbin shape. Referring to Fig. 4, the insulator 33 includes a cylindrical portion 33a located between the stator core 32 and the stator coil 34 and flanges 33b and 33c formed at ends of both openings of the cylindrical portion 33a, respectively.

The flanges 33b and 33c are formed in a rectangular shape with the opening ends of the cylindrical portion 33a extending outward in the circumferential direction.

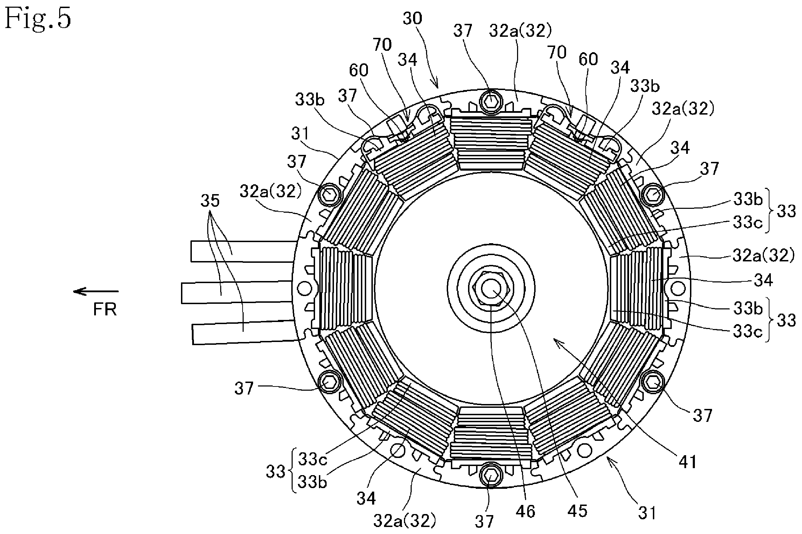

As illustrated in Figs. 4 and 5, the outer flange 33b is formed at the end of the opening of the cylindrical portion 33a located outside in the radial direction, the cylindrical portion 33a being oriented in the radial direction of (radially oriented with respect to) the stator 31, and the inner flange 33c is formed at the end of the opening of the cylindrical portion 33a located inside in the radial direction.

The outer flange 33b of the insulator 33 is in contact with a radially outer end of the stator coil 34 wound around the cylindrical portion 33a, and the inner flange 33c of the insulator 33 is in contact with a radially inner end face of the stator coil 34 wound around the cylindrical portion 33a.

The temperature sensor holder 70 that holds the temperature sensor 60 for detecting a temperature of the stator coil 34 is mounted on the outer flanges 33b of the insulators 33 of two stator cores 32 which are the front-side stator core 32 and the rear-side stator core 32 out of the upper stator cores among the plurality of stator cores 32 arranged radially in the circumferential direction (see Figs. 3 and 5).

The temperature sensor 60 has a sensor element incorporated in a cylindrical sensor tube 61, and has a temperature measuring unit 62 at one end of the sensor tube 61.

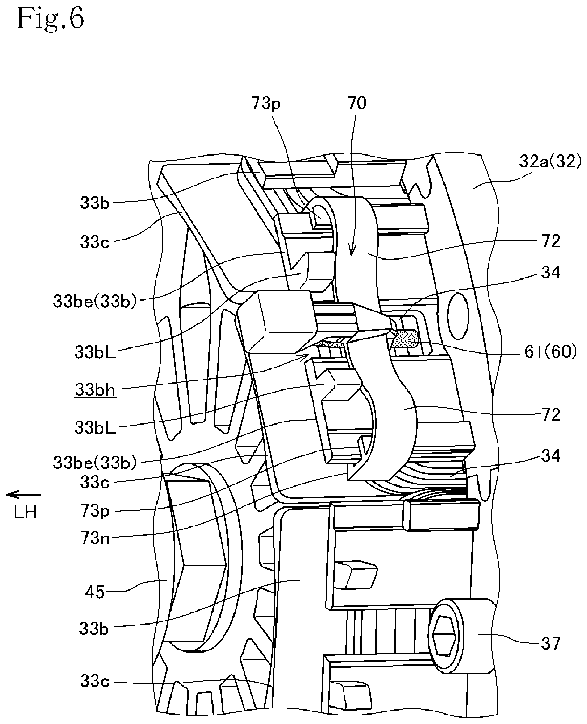

The temperature sensor 60 is illustrated with a dotted pattern in Figs. 6 to 9.

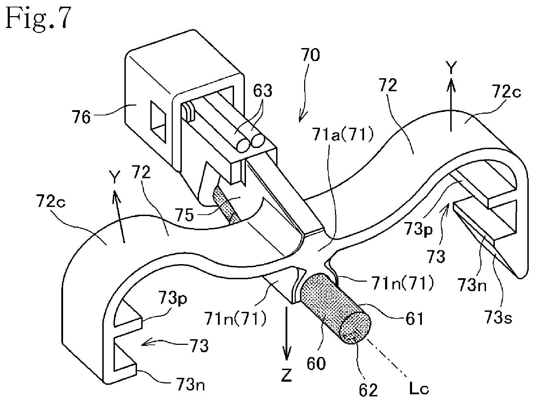

Referring to Fig. 7, the temperature sensor holder 70 is made of resin, and includes a sensor holding portion 71 that holds the temperature sensor 60, a pair of arms 72 and 72 having curved portions 72c and 72c extending in opposite directions from the sensor holding portion 71, and a pair of holder engagement portions 73 and 73 respectively provided at outer ends of the pair of arms 72 and 72 facing each other.

The sensor holding portion 71 has a pair of holder tabs 71n and 71n that forms a cylindrical shape with one side in the circumferential direction being open and that symmetrically protrudes from a central base part 71a so as to face each other.

The temperature sensor 60 is held in such a manner that the cylindrical sensor tube 61 of the temperature sensor 60 is held by the pair of holder tabs 71n and 71n from both sides with a central axis of the sensor tube 61 being aligned with a central axis Lc of a cylinder defined by the pair of cylindrical holder tabs 71n and 71n.

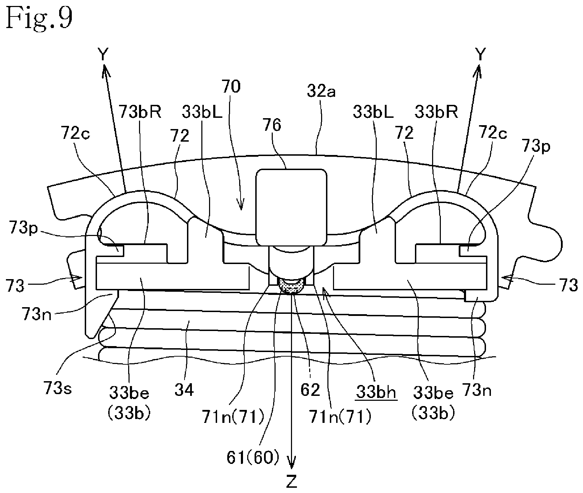

When the pair of holder tabs 71n and 71n holds the sensor tube 61, the cylindrical sensor tube 61 partially protrudes from between tips of both of the pair of holder tabs 71n and 71n (see Fig. 9).

As illustrated in Fig. 7, the pair of arms 72 and 72 extends in opposite directions from the central base part 71a at the proximal ends of the pair of holder tabs 71n and 71n.

The temperature sensor holder 70 includes a connection portion 75 that extends in the axial direction of the central axis Lc from the central base part 71a of the sensor holding portion 71 and a box portion 76 provided via the connection portion 75.

As illustrated in Fig. 7, the sensor tube 61 extends to both sides in the axial direction of the central axis Lc from the portion held by the pair of holder tabs 71n and 71n. An end of a portion of the sensor tube 61 extending along the connection portion 75 on the connection portion 75 side is inserted into the box portion 76, and an end of a portion extending to the side opposite to the connection portion 75 is provided with the temperature measuring unit 62.

Two signal lines 63 of the temperature sensor 60 extend from the end of the sensor tube 61 inserted into the box portion 76 and extend from the inside of the box portion 76 toward the connection portion 75.

The pair of arms 72 and 72 extending in the opposite directions from the central base part 71a of the sensor holding portion 71 are band-shaped plate portions having a constant width in the axial direction of the central axis Lc, and have: curved portions 72c and 72c curved so as to project in a direction (direction indicated by an arrow Y in Figs. 7 and 9) substantially opposite to the direction (direction indicated by an arrow Z in Figs. 7 and 9) in which the holder tabs 71n and 71n protrude from the central base part 71a; and the pair of holder engagement portions 73 and 73 at outer ends of the curved portions 72c and 72c facing each other.

The pair of holder engagement portions 73 and 73 facing each other has a pair of engagement tabs 73n and 73n that protrudes in a direction in which the holder engagement tabs 73n and 73n face each other.

The engagement tab 73n of one of the pair of holder engagement portions 73 and 73 has an inclined surface 73s that tapers toward the leading end in a direction perpendicular to the direction in which the engagement tab 73n protrudes.

The pair of holder engagement portions 73 and 73 also has protruding pieces 73p and 73p protruding in parallel to the engagement tabs 73n and 73n in the same direction as the engagement tabs 73n and 73n on the side closer to the arms 72 and 72 with respect to the engagement tabs 73n and 73n.

The temperature sensor holder 70 is mounted on a left end part 33be of the outer flange 33b, which has a rectangular plate shape, of the insulator 33 as illustrated in Fig. 6.

The left end part 33be of the outer flange 33b in contact with the radially outer end of the stator coil 34 wound around the cylindrical portion 33a of the insulator 33 protrudes to the left beyond the radially outer end of the stator coil 34, and the temperature sensor holder 70 is mounted on the protruding left end part 33be.

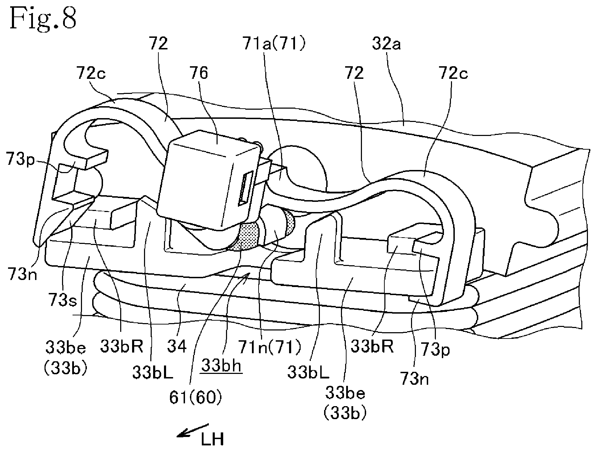

As illustrated in Fig. 8, the left end part 33be, which has a rectangular plate shape, of the outer flange 33b is cut from the center of the left edge to the right to form an opening 33bh.

The opening 33bh extends to the right up to a region where the radially outer end of the stator coil 34 is exposed.

Further, the left end part 33be of the outer flange 33b includes two left positioning protrusions 33bL and two right positioning protrusions 33bR which protrude in the radial direction of the stator 31. A set of the left positioning protrusion 33bL and the right positioning protrusion 33bR is provided on each side of the opening 33bh.

As illustrated in Fig. 8, the left positioning protrusion 33bL protrudes along the left end edge of the left end part 33be at a position close to the opening 33bh, and the right positioning protrusion 33bR protrudes at a position farther from the opening 33bh so as to be away from the left positioning protrusion 33bL to the right by the width of the arm 72 of the temperature sensor holder 70.

The left positioning protrusions 33bL and 33bL are formed at symmetrical positions on both sides of the opening 33bh, and the right positioning protrusions 33bR and 33bR are similarly formed at symmetrical positions on both sides of opening 33bh.

The left positioning protrusion 33bL and the right positioning protrusion 33bR position the temperature sensor holder 70 by holding the arm 72 therebetween.

The temperature sensor holder 70 holding the temperature sensor 60 is mounted on the left end part 33be of the outer flange 33b of the insulator 33 from the outside of the stator 31 in the radial direction.

Referring to Fig. 8, first, the temperature sensor holder 70 is positioned on the radially outer side of the stator 31 with respect to the left end part 33be of the outer flange 33b, and one of the engagement tabs 73n without having the inclined surface 73s out of the pair of engagement tabs 73n and 73n of the temperature sensor holder 70 is hooked on one side part protruding to the left of the left end part 33be of the outer flange 33b.

The side part of the left end part 33be of the outer flange 33b is located between the engagement tab 73n and the protruding piece 73p.

Next, the temperature sensor holder 70 inclined with respect to the outer flange 33b is rotated about the portion where the temperature sensor holder 70 is hooked on the engagement tab 73n not having the inclined surface 73s in a direction in which the other engagement tab 73n having the inclined surface 73s approaches the other side part of the left end part 33be.

Due to the rotation of the temperature sensor holder 70, the inclined surface 73s of the other engagement tab 73n comes into contact with and slides on the other side part of the left end part 33be of the outer flange 33b, and the curved portion 72c of the arm 72 is elastically deformed so as to open, whereby the engagement tab 73n is displaced in a direction away from the other side part of the left end part 33be of the outer flange 33b.

While the inclined surface 73s of the other engagement tab 73n is in sliding contact with the other side part of the left end part 33be of the outer flange 33b due to the rotation of the temperature sensor holder 70, the temperature sensor 60 held by the pair of holder tabs 71n and 71n of the sensor holding portion 71 at the center of the temperature sensor holder 70 enters the opening 73bh of the left end part 33be of the outer flange 33b and is brought into pressure contact with the stator coil 34 exposed from the opening 73bh.

The temperature sensor holder 70 is further rotated after the temperature sensor 60 is brought into pressure contact with the stator coil 34, by which the curved portion 72c of the arm 72 is elastically deformed so as to be further opened to allow the other engagement tab 73n to climb over the other side part of the left end part 33be of the outer flange 33b, and an elastic force acts in a direction in which the opened curved portion 72c of the arm 72 is closed. Thus, the other engagement tab 73n is engaged with the other side part of the left end part 33be of the outer flange 33b as illustrated in Fig. 9.

Elastic force acts on the pair of arms 72 and 72 in a direction in which the curved portions 72c and 72c are closed, by which the pair of engagement tabs 73n and 73n is engaged with the side parts of the left end part 33be, and at the same time, the sensor holding portion 71 at the center brings the temperature sensor 60 in pressure contact with the stator coil 34. Thus, the temperature sensor holder 70 is mounted on the left end part 33be of the outer flange 33b of the insulator 33.

The curved portion 72c of the arm 72 of the temperature sensor holder 70 is curved so as to project outward in the radial direction of the stator 31 (the direction indicated by the arrow Y in Fig. 9), and the temperature sensor 60 held by the sensor holding portion 71 is brought into pressure contact with the stator coil 34 by the elastic force of the curved portion 72c of the arm 72 toward the inside of the stator 31 in the radial direction (the direction indicated by the arrow Z in Fig. 9).

In the temperature sensor 60, the temperature measuring unit 62 at one end of the sensor tube 61 is in pressure contact with the stator coil 34.

The arms 72 are held between the two left positioning protrusions 33bL and the right positioning protrusions 33bR protruding in the radial direction of the stator 31 at the left end part 33be of the outer flange 33b, whereby the movement of the temperature sensor holder 70 in the axial direction (left-right direction) of the rotary drive shaft 45 is restricted.

Note that the left positioning protrusion 33bL is located on the proximal end side (the central base part 71a side) of the curved portion 72c of the arm 72, and the right positioning protrusion 33bR is located on the outer end side (the holder engagement portion 73 side) of the curved portion 72c. That is, the left positioning protrusion 33bL and the right positioning protrusion 33bR are provided avoiding the curved portion 72c of the arm 72 that is elastically deformed. Thus, even when the curved portion 72c of the arm 72 is deformed by vibration, the positioning of the rotary drive shaft 45 in the axial direction is maintained.

As illustrated in Fig. 3, the motor 30 is disposed at the rear part of the main arm 21M of the swing frame 21 with the rotary drive shaft 45 being oriented in the horizontal vehicle width direction.

In the motor 30 oriented as described above, the temperature sensor holders 70 are respectively mounted on the outer flanges 33b and 33b of the insulators 33 and 33 provided in the front-side stator core 32 and the rear-side stator core 32 out of the uppermost stator cores 32 among the plurality of stator cores 32 divided and arranged in the circumferential direction of the stator 31 (see Fig. 3).

The embodiment of the temperature sensor mounting structure according to the present invention described in detail above has the following effects.

As illustrated in Fig. 9, the temperature sensor holder 70 can be mounted on the outer flange 33b of the insulator 33 in such a manner that the engagement tab 73n of the holder engagement portion 73 is engaged with the outer flange 33b of the insulator 33 due to elastic force of the curved portion 72c of the arm 72, and at the same time, the sensor holding portion 71 brings the temperature sensor 60 in pressure contact with the stator coil 34. Therefore, the load on the temperature sensor 60 due to vibration can be absorbed by the elastic deformation of the curved portion 72c of the arm 72, whereby the pressure contact of the temperature sensor 60 with the stator coil 34 by the sensor holding portion 71 can be constantly maintained.

Accordingly, the temperature of the stator coil 34 can be constantly and stably measured.

Referring to Fig. 8, the temperature sensor holder 70 mounted on the outer flange 33b of the insulator 33 can be removed from the outer flange 33b of the insulator 33 in such a manner that the curved shape of the curved portion 72c of the arm 72 is deformed to release the engagement of the engagement tab 73n of the holder engagement portion 73 with the outer flange 33b of the insulator 33. Thus, the temperature sensor holder 70 can be easily removed.

Since the protruding engagement tab 73n of the holder engagement portion 73 is engaged with the end of the outer flange 33b of the insulator 33, the protruding engagement tab 73n is engaged in a state of being hooked on the end of the outer flange 33b of the insulator 33. Therefore, the engagement tab 73n is easily engaged and disengaged. That is, the temperature sensor holder 70 is more easily mounted and removed.

Since the curved shape of the curved portion 72c of the arm 72 is deformed to mount and remove the temperature sensor holder 70, stress is distributed without concentration, so that the temperature sensor holder 70 is not damaged.

In addition, there is no influence on the outer flange 33b of the insulator 33, and the insulator 33 is also not deformed and is not damaged.

In the temperature sensor holder 70 according to the present embodiment, the pair of arms 72 extends from the sensor holding portion 71 in directions opposite to each other, and the engagement tabs 73n of the pair of holder engagement portions 73 are provided at the outer ends of the pair of arms 72.

Therefore, with reference to Fig. 9, the sensor holding portion 71 at the center brings the temperature sensor 60 in pressure contact with the stator coil 34 by the elastic force of the curved portions 72c and 72c of the arms 72 and 72 on both sides of the sensor holding portion 71, so that the temperature sensor 60 can be stably brought into pressure contact with the stator coil 34 in a well-balanced manner.

In addition, with reference to Fig. 8, when the temperature sensor holder 70 is removed from the outer flange 33b of the insulator 33, the curved portions 72c and 72c of the arms 72 and 72 on both sides are elastically deformed. Therefore, only small deformation of the curved portions 72c of the arms 72 is required, and thus, the temperature sensor holder is not damaged.

As illustrated in Fig. 9, the holder engagement portion 73 has the protruding piece 73p protruding in the same direction as the engagement tab 73n on the arm 72 side with respect to the engagement tab 73n, and the engagement tab 73n is engaged with the end of the outer flange 33b of the insulator 33 positioned between the engagement tab 73n and the protruding piece 73p. Therefore, even when the arm 72 is deformed to open the curved portion 72c by the vibration of the motor 30, the protruding piece 73p comes in contact with the end of the outer flange 33b of the insulator 33 and serves as a stopper, and thus, the end of the outer flange 33b of the insulator 33 is prevented from coming off from between the protruding piece 73p and the engagement tab 73n. Accordingly, the temperature sensor holder 70 is prevented from being disengaged from the outer flange 33b of the insulator 33.

Further, as illustrated in Fig. 8, when the engagement tab 73n not having the inclined surface 73s is hooked on one side part of the left end part 33be protruding to the left of the outer flange 33b during mounting of the temperature sensor holder 70 to the outer flange 33b of the insulator 33, the one side part of the left end part 33be of the outer flange 33b is positioned between the engagement tab 73n and the protruding piece 73p. Therefore, when the temperature sensor holder 70 is rotated to engage the other engagement tab 73n having the inclined surface 73s with the other side part of the left end part 33be of the outer flange 33b, the protruding piece 73p serves as a stopper to prevent the engaged engagement tab 73n from being disengaged from the one side part of the left end part 33be of the outer flange 33b. This facilitates mounting of the temperature sensor holder 70.

With reference to Figs. 8 and 9, the engagement tab 73n of at least one of the pair of holder engagement portions 73 and 73 has the inclined surface 73s tapered toward the leading end in the direction perpendicular to the protruding direction thereof. Therefore, when the inclined surface 73s of the engagement tab 73n is pressed against the end of the outer flange 33b of the insulator 33, the curved portion 72c of the arm 72 is elastically deformed, the position of the engagement tab 73n is changed while the end of the outer flange 33b slides on the inclined surface 73s of the engagement tab 73n, and the engagement tab 73n can be engaged with the end of the outer flange 33b by the elastic restoring force of the curved portion 72c of the arm 72 after the engagement tab 73n climbs over the end face of the outer flange 33b of the insulator 33.

Therefore, the temperature sensor holder 70 can be smoothly mounted on the outer flange 33b of the insulator 33.

The insulator 33 has the outer flange 33b formed along the stator coil 34 at the opening end of the cylindrical portion 33a on the radially outer side of the stator 31, the cylindrical portion 33a being located between the stator core 32 and the stator coil 34. As illustrated in Fig. 8, the temperature sensor holder 70 is mounted on the outer flange 33b from the radially outer side of the stator 31 with the engagement tab 73n of the holder engagement portion 73 being engaged with the end of the outer flange 33b of the insulator 33. Therefore, the temperature sensor holder 70 does not interfere with the insertion of the rotor 41 within the stator 31, whereby the rotor 41 can be easily mounted.

In addition, it is possible to prevent the temperature sensor holder 70 from protruding from the stator coil 34 in the axial direction of the rotary drive shaft 45.

With reference to Fig. 9, the outer flange 33b of the insulator 33 is provided with the left positioning protrusion 33bL and the right positioning protrusion 33bR that protrude radially outward of the stator 31 and restrict the movement of the temperature sensor holder 70 in the axial direction of the rotary drive shaft 45, so that the temperature sensor holder 70 can be prevented from being disengaged from the outer flange 33b even when the motor 30 receives impact or vibration in the axial direction of the rotary drive shaft 45.

Referring to Fig. 9, when the opening 33bh through which the stator coil 34 is exposed is formed in the outer flange 33b of the insulator 33 and the temperature sensor holder 70 is mounted on the outer flange 33b, the temperature sensor 60 held by the sensor holding portion 71 enters the opening 33bh and is brought into pressure contact with the stator coil 34, so that a simple and compact temperature sensor mounting structure can be obtained.

Referring to Fig. 9, the curved portion 72c of the arm 72 of the temperature sensor holder 70 is curved so as to project outward in the radial direction of the stator 31, and the temperature sensor 60 held by the sensor holding portion 71 is brought into pressure contact with the stator coil by the elastic force of the curved portion 72c of the arm 72 toward the inside of the stator 31 in the radial direction (the direction indicated by the arrow Z in Fig. 9). Therefore, even when the motor 30 receives vibration of the stator 31 in the radial direction, the temperature sensor 60 can be constantly brought into pressure contact with the stator coil 34 following the vibration by the elastic deformation of the curved portion 72c of the arm 72 that is curved so as to project outward in the radial direction of the stator 31.

Referring to Fig. 3, the motor 30 is mounted on the motorcycle 1 with the rotary drive shaft 45 being oriented in the left-right horizontal direction. Therefore, the vibration of the motor 30 in the vertical direction accompanying the traveling of the vehicle is the vibration of the stator 31 of the motor 30 in the radial direction, and thus, the elastic deformation of the curved portion 72c projecting in the radial direction of the arm 72 effectively acts, so that the temperature sensor 60 can be constantly pressed against the stator coil 34 following the vibration in the vertical direction. Accordingly, the temperature of the stator coil 34 can be constantly and stably measured.

According to the invention, the temperature sensor holder 70 includes the pair of arms 72 and 72 extending in the opposite directions from the sensor holding portion 71 and the pair of holder engagement portions 73 and 73 at the outer ends of the arms 72 and 72. However, a temperature sensor holder including only one arm extending from the sensor holding portion and one holder engagement portion at the outer end of the arm may be applied, but does not form part of the present invention. With this temperature sensor holder, the temperature sensor holder can be mounted on the motor in such a manner that the holder engagement portion is engaged with the insulator of the motor due to elastic force to close the curved portion of the arm, and at the same time, the sensor holding portion brings the temperature sensor in pressure contact with the stator coil.

### [Reference Signs List]

- 1: motorcycle
- 2: vehicle body frame
- 3: head pipe
- 4: main frame
- 5: down frame
- 6: seat rail
- 7: back stay
- 8: seat
- 10: front fork
- 11: front wheel
- 12: steering handlebar
- 15: link mechanism
- 16: rear cushion
- 17: stand
- 20: power unit
- 21: swing frame
- 21M: main arm
- 21b: bracket
- 22: arm cover
- 23: power transmission mechanism
- 25: rear wheel
- 26: rear axle
- 30: motor
- 31: stator
- 32: stator core
- 32a: outer arc-shaped end part
- 33: insulator
- 33a: cylindrical portion
- 33b: outer flange
- 33be: left end part
- 33bh: opening
- 33bL: left positioning protrusion
- 33bR: right positioning protrusion
- 33c: inner flange
- 34: stator coil
- 35: three-phase electric wire
- 37: bolt
- 41: rotor
- 42: cylindrical boss portion
- 43: rotor core
- 44: magnet
- 45: rotary drive shaft
- 46: nut
- 47: washer
- 50: motor cover
- 60: temperature sensor
- 61: sensor tube
- 62: temperature measuring unit
- 63: signal line
- 70: temperature sensor holder
- 71: sensor holding portion
- 71a: central base part
- 71n: holder tab
- 72: arm
- 72c: curved portion
- 73: holder engagement portion
- 73n: engagement tab
- 73s: inclined surface
- 73p: protruding piece
- 75: connection portion
- 76: box portion

## Claims

1. A temperature sensor mounting method for mounting a temperature sensor (60),
using a temperature sensor holder (70) for mounting the temperature sensor (60) that measures a temperature of one of a plurality of stator coils (34) of a motor (30) to the motor (30), the temperature sensor holder (70) including a sensor holding portion (71) that holds the temperature sensor (60), a pair of holder engagement portions (73) to be engaged with the motor (30), and a pair of arms (72) each having a corresponding curved portion (72c) connecting the sensor holding portion (71) and the corresponding holder engagement portion (73),
the motor (30) including a stator (31) that includes the plurality of stator coils (34) each wound around a corresponding stator core (32) via a corresponding insulator (33) and a rotor (41) that holds a magnet (44) and that is supported within the stator (31) together with a rotary drive shaft (45) in a rotatable manner, the stator (31) being formed in an annular shape by arranging the plurality of stator coils (34) in a circumferential direction, each of the curved portions (72c) of the arms (72) being curved so as to project in a radial outward direction of the stator (31),
the temperature sensor mounting method comprising
engaging each of the holder engagement portions (73) with the corresponding insulator (33) by an elastic force of the curved portion (72c) of the corresponding arm (72) of the temperature sensor holder (70), and at the same time, bringing the temperature sensor (60) into pressure contact with the corresponding stator coil (34) by the sensor holding portion (71) to mount the temperature sensor holder (70) to the corresponding insulator (33), wherein
each of the insulators (33) includes a cylindrical portion (33a) located between the corresponding stator core (32) and the corresponding stator coil (34), and has an outer flange (33b) formed along the corresponding stator coil (34) at an opening end of the corresponding cylindrical portion (33a) on a radially outer side of the stator (31), and
the temperature sensor holder (70) is mounted on the outer flange (33b) from a radially outer side of the stator (31) with the corresponding holder engagement portion (73) being engaged with an end of the outer flange (33b).

2. The temperature sensor mounting method as claimed in claim 1, wherein
each of the holder engagement portions (73) includes an engagement tab (73n) that protrudes, and
the engagement tab (73n) is engaged with an end of the corresponding insulator (33).

3. The temperature sensor mounting method as claimed in claim 2, wherein
each of the holder engagement portions (73) includes a protruding piece (73p) formed closer to the corresponding arm (72) relative to the engagement tab (73n), the protruding piece (73p) protruding in a direction same as the engagement tab (73n), and
the engagement tab (73n) is engaged with an end of the corresponding insulator (33) positioned between the engagement tab (73n) and the protruding piece (73p).

4. The temperature sensor mounting method as claimed in claim 2 or 3, wherein the arms (72) extend from the sensor holding portion (71) of the temperature sensor holder (70), respectively, in directions opposite to each other, and each of the holder engagement portions (73) is provided at an outer end of the corresponding arm (72).

5. The temperature sensor mounting method as claimed in claim 4, wherein the engagement tab (73n) of at least one of the pair of holder engagement portions (73) has an inclined surface (73s) tapered toward a leading end in a direction perpendicular to a protruding direction of the engagement tab (73n).

6. The temperature sensor mounting method as claimed in claim 1, wherein the outer flange (33b) of each of the insulators (33) is formed with a positioning protrusion (33bL, 33bR) that protrudes outward in a radial direction of the stator (31) and restricts movement of the temperature sensor holder (70) in an axial direction of the rotary drive shaft (45).

7. The temperature sensor mounting method as claimed in claim 1 or 6, wherein the outer flange (33b) of each of the insulators (33) has an opening (33bh) through which the stator coil (34) is exposed, and
when the temperature sensor holder (70) is mounted on the outer flange (33b), the temperature sensor (60) held by the sensor holding portion (71) enters the opening (33bh) and is brought into pressure contact with the stator coil (34).

8. The temperature sensor mounting method as claimed in any one of claims 1 to 7, wherein
the curved portion (72c) of each of the arms (72) of the temperature sensor holder (70) is curved so as to project outward in a radial direction of the stator (31), and
the temperature sensor (60) held by the sensor holding portion (71) is brought into pressure contact with the stator coil (34) by an elastic force of the curved portion (72c) of each of the arms (72) toward inside of the stator (31) in a radial direction.

9. The temperature sensor mounting method as claimed in claim 8, wherein the motor (30) is mounted on a vehicle with the rotary drive shaft (45) being oriented in a horizontal direction.

10. A temperature sensor holder (70) configured for mounting a temperature sensor (60) that measures a temperature of one of a plurality of stator coils (34) to a motor (30), the motor (30) including a stator (31) that includes the plurality of stator coils (34) each wound around a corresponding stator core (32) via a corresponding insulator (33) and a rotor (41) that holds a magnet (44) and that is supported within the stator (31) together with a rotary drive shaft (45) in a rotatable manner, the temperature sensor holder (70) comprising:
a sensor holding portion (71) that is configured to hold the temperature sensor (60);
a pair of holder engagement portions (73) engaged with the motor (30); and
a pair of arms (72) each having a corresponding curved portion (72c) connecting the sensor holding portion (71) and the corresponding holder engagement portion (73), wherein
each of the insulators (33) includes a cylindrical portion (33a) located between the corresponding stator core (32) and the corresponding stator coil (34), and has an outer flange (33b) formed along the corresponding stator coil (34) at an opening end of the corresponding cylindrical portion (33a) on a radially outer side of the stator (31), ,
the arms (72) extend from the sensor holding portion (71) respectively in a circumferential direction of the stator (31) opposite to each other, and
the temperature sensor holder (70) is mounted on the outer flange (33b) from a radially outer side of the stator (31), with the holder engagement portions (73) provided at circumferentially outer ends of the corresponding arms (72), each being engaged with a corresponding end of the outer flange (33b).

11. The temperature sensor holder (70) as claimed in claim 10, wherein
the outer flange (33b) of each of the insulators (33) is formed with a positioning protrusion (33bL, 33bR) that protrudes outward in a radial direction of the stator (31) and restricts movement of the temperature sensor holder (70) in an axial direction of the rotary drive shaft (45).

12. The temperature sensor holder (70) as claimed in claim 10 or 11, wherein
the outer flange (33b) of each of the insulators (33) has an opening (33bh) through which the stator coil (34) is exposed, and
when the temperature sensor holder (70) is mounted on the outer flange (33b), the temperature sensor (60) held by the sensor holding portion (71) enters the opening (33bh) and is brought into pressure contact with the stator coil (34).

## Patentansprüche

1. Temperatursensorbefestigungsverfahren zur Befestigung eines Temperatursensors (60),
Verwendung eines Temperatursensorhalters (70) zur Befestigung des Temperatursensors (60), der die Temperatur einer von mehreren Statorspulen (34) eines Motors (30) misst, an dem Motor (30), wobei der Temperatursensorhalter (70) einen Sensorhalteabschnitt (71), der den Temperatursensor (60) hält, ein Paar Halter-Eingriffsabschnitte (73) zum Eingriff mit dem Motor (30) und ein Paar Arme (72) umfasst, von denen jeder einen entsprechenden gekrümmten Abschnitt (72c) aufweist, der den Sensorhalteabschnitt (71) und den entsprechenden Halter-Eingriffsabschnitt (73) verbindet,
wobei der Motor (30) einen Stator (31) umfasst, der die Vielzahl von Statorspulen (34) enthält, die jeweils über einen entsprechenden Isolator (33) um einen entsprechenden Statorkern (32) gewickelt sind, sowie einen Rotor (41), der einen Magneten (44) hält und zusammen mit einer drehbaren Antriebswelle (45) drehbar im Stator (31) gelagert ist, wobei der Stator (31) durch Anordnen der mehreren Statorspulen (34) in Umfangsrichtung ringförmig ausgebildet ist, wobei jeder der gekrümmten Abschnitte (72c) der Arme (72) so gekrümmt ist, dass er in radialer Richtung nach außen vom Stator (31) vorsteht,
wobei das Temperatursensorbefestigungsverfahren umfasst:
das Ineingriffbringen jedes der Halter-Eingriffsabschnitte (73) mit dem entsprechenden Isolator (33) durch eine elastische Kraft des gekrümmten Abschnitts (72c) des entsprechenden Arms (72) des Temperatursensorhalters (70), und gleichzeitig den Temperatursensor (60) durch den Sensorhalteabschnitt (71) in Druckkontakt mit der entsprechenden Statorspule (34) zu bringen, um den Temperatursensorhalter (70) an dem entsprechenden Isolator (33) zu befestigen,
wobei jeder der Isolatoren (33) einen zylindrischen Abschnitt (33a) aufweist, der zwischen dem entsprechenden Statorkern (32) und der entsprechenden Statorspule (34) angeordnet ist, und einen Außenflansch (33b) aufweist, der entlang der entsprechenden Statorspule (34) an einem Öffnungsende des entsprechenden zylindrischen Abschnitts (33a) auf einer radial äußeren Seite des Stators (31) ausgebildet ist, und
wobei der Temperatursensorhalter (70) von einer radial äußeren Seite des Stators (31) her an dem Außenflansch (33b) angebracht ist, wobei der entsprechende Halter-Eingriffsabschnitt (73) mit einem Ende des Außenflansches (33b) in Eingriff steht.

2. Temperatursensorbefestigungsverfahren nach Anspruch 1, wobei
jeder der Halter-Eingriffsabschnitte (73) eine vorstehende Eingriffslasche (73n) aufweist, und
die Eingriffslasche (73n) mit einem Ende des entsprechenden Isolators (33) in Eingriff steht.

3. Temperatursensorbefestigungsverfahren nach Anspruch 2, wobei
jeder der Halter-Eingriffsabschnitte (73) ein Vorsprungsstück (73p) umfasst, das relativ zur Eingriffslasche (73n) näher am entsprechenden Arm (72) ausgebildet ist, wobei das Vorsprungsstück (73p) in derselben Richtung wie die Eingriffslasche (73n) vorsteht, und
die Eingriffslasche (73n) mit einem Ende des entsprechenden Isolators (33) in Eingriff steht, das zwischen der Eingriffslasche (73n) und dem Vorsprung (73P) positioniert ist.

4. Temperatursensorbefestigungsverfahren nach Anspruch 2 oder 3, wobei sich die Arme (72) jeweils vom Sensorhalteabschnitt (71) des Temperatursensorhalters (70) in zueinander entgegengesetzte Richtungen erstrecken und jeder der Halter-Eingriffsabschnitte (73) an einem äußeren Ende des entsprechenden Arms (72) vorgesehen ist.

5. Temperatursensorbefestigungsverfahren nach Anspruch 4, wobei die Eingriffslasche (73n) mindestens eines der beiden Halter-Eingriffsabschnitte (73) eine geneigte Fläche (73s) aufweist, die sich in einer Richtung senkrecht zur Auskragungsrichtung der Eingriffslasche (73n) zum vorderen Ende hin verjüngt.

6. Temperatursensorbefestigungsverfahren nach Anspruch 1, wobei der Außenflansch (33b) jedes der Isolatoren (33) mit einem Positionierungsvorsprung (33bL, 33bR) versehen ist, der in radialer Richtung des Stators (31) nach außen vorsteht und die Bewegung des Temperatursensorhalters (70) in axialer Richtung der Drehantriebswelle (45) begrenzt.

7. Temperatursensorbefestigungsverfahren nach Anspruch 1 oder 6, wobei der Außenflansch (33b) jedes der Isolatoren (33) eine Öffnung (33bh) aufweist, durch die die Statorspule (34) freiliegt, und
wenn der Temperatursensorhalter (70) an dem Außenflansch (33b) montiert ist, der von dem Sensorhalteabschnitt (71) gehaltene Temperatursensor (60) in die Öffnung (33bh) eintritt und in Druckkontakt mit der Statorspule (34) gebracht wird.

8. Temperatursensorbefestigungsverfahren nach einem der Ansprüche 1 bis 7, wobei
der gekrümmte Abschnitt (72c) jedes der Arme (72) des Temperatursensorhalters (70) so gekrümmt ist, dass er in radialer Richtung des Stators (31) nach außen vorsteht, und
der vom Sensorhalterungsabschnitt (71) gehaltene Temperatursensor (60) durch eine elastische Kraft des gekrümmten Abschnitts (72c) jedes der Arme (72) in radialer Richtung zum Inneren des Stators (31) hin in Druckkontakt mit der Statorspule (34) gebracht wird.

9. Temperatursensorbefestigungsverfahren nach Anspruch 8, wobei der Motor (30) an einem Fahrzeug montiert ist, wobei die rotierende Antriebswelle (45) in horizontaler Richtung ausgerichtet ist.

10. Ein Temperatursensorhalter (70), der zur Befestigung eines Temperatursensors (60) an einem Motor (30) ausgebildet ist, wobei der Temperatursensor (60) die Temperatur einer von mehreren Statorspulen (34) misst, wobei der Motor (30) einen Stator (31) umfasst, der die mehreren Statorspulen (34) enthält, die jeweils über einen entsprechenden Isolator (33) gewickelt sind, sowie einen Rotor (41) aufweist, der einen Magneten (44) hält und zusammen mit einer rotierenden Antriebswelle (45) drehbar im Stator (31) gelagert ist, wobei der Temperatursensorhalter (70) umfasst:
einen Sensorhalteabschnitt (71), der so konfiguriert ist, dass er den Temperatursensor (60) hält;
ein Paar Halter-Eingriffsabschnitte (73), die mit dem Motor (30) in Eingriff stehen; und
ein Paar Arme (72), die jeweils einen entsprechenden gekrümmten Abschnitt (72c) aufweisen, der den Sensorhalteabschnitt (71) und den entsprechenden Halter-Eingriffsabschnitt (73) verbindet, wobei
jeder der Isolatoren (33) einen zylindrischen Abschnitt (33a) umfasst, der sich zwischen dem entsprechenden Statorkern (32) und der entsprechenden Statorspule (34) befindet, und einen Außenflansch (33b) aufweist, der entlang der entsprechenden Statorspule (34) an einem offenen Ende des entsprechenden zylindrischen Abschnitts (33a) auf einer radial äußeren Seite des Stators (31) ausgebildet ist,
die Arme (72) sich vom Sensorhalteabschnitt (71) jeweils in einer Umfangsrichtung des Stators (31) einander gegenüberliegend erstrecken, und
der Temperatursensorhalter (70) von einer radial äußeren Seite des Stators (31) her an dem Außenflansch (33b) angebracht ist, wobei die Halter-Eingriffsabschnitte (73) an den Umfangsaußenenden der entsprechenden Arme (72) vorgesehen sind und jeweils mit einem entsprechenden Ende des Außenflansches (33b) in Eingriff stehen.

11. Temperatursensorhalter (70) nach Anspruch 10, wobei
der Außenflansch (33b) jedes der Isolatoren (33) mit einem Positionierungsvorsprung (33bL, 33bR) versehen ist, der in radialer Richtung des Stators (31) nach außen vorsteht und die Bewegung des Temperatursensorhalters (70) in axialer Richtung der Drehantriebswelle (45) begrenzt.

12. Der Temperatursensorhalter (70) nach Anspruch 10 oder 11, wobei
der Außenflansch (33b) jedes der Isolatoren (33) eine Öffnung (33bh) aufweist, durch die die Statorspule (34) freiliegt, und
wenn der Temperatursensorhalter (70) auf dem Außenflansch (33b) montiert ist, der vom Sensorhalteabschnitt (71) gehaltene Temperatursensor (60) in die Öffnung (33bh) eintritt und in Druckkontakt mit der Statorspule (34) gebracht wird.

## Revendications

1. Procédé de montage de capteur de température pour monter un capteur de température (60),
à l'aide d'un support (70) de capteur de température pour monter le capteur de température (60), qui mesure une température de l'une d'une pluralité de bobines (34) de stator d'un moteur (30), sur le moteur (30), le support (70) de capteur de température comportant une partie de maintien (71) de capteur qui maintient le capteur de température (60), une paire de parties de mise en prise (73) de support à mettre en prise avec le moteur (30), et une paire de bras (72) présentant chacun une partie incurvée (72c) correspondante reliant la partie de maintien (71) de capteur et la partie de mise en prise (73) de support correspondante,
le moteur (30) comportant un stator (31), qui comprend la pluralité de bobines (34) de stator enroulées chacune autour d'un noyau (32) de stator correspondant par l'intermédiaire d'un isolant (33) correspondant, et un rotor (41) qui maintient un aimant (44) et qui est supporté à l'intérieur du stator (31) conjointement avec un arbre d'entraînement rotatif (45) de manière rotative, le stator (31) étant de forme annulaire par agencement de la pluralité de bobines (34) de stator dans une direction circonférentielle, chacune des parties incurvées (72c) des bras (72) étant incurvée de manière à s'étendre dans une direction radiale vers l'extérieur du stator (31),
le procédé de montage de capteur de température comprenant
la mise en prise de chacune des parties de mise en prise (73) de support avec l'isolant (33) correspondant par une force élastique de la partie incurvée (72c) du bras (72) correspondant du support (70) de capteur de température, et en même temps, la mise en contact à pression du capteur de température (60) avec la bobine (34) de stator correspondante par la partie de maintien (71) de capteur pour monter le support (70) de capteur de température sur l'isolant (33) correspondant, dans lequel
chacun des isolants (33) comporte une partie cylindrique (33a) située entre le noyau (32) de stator correspondant et la bobine (34) de stator correspondante, et présente une bride extérieure (33b) formée le long de la bobine (34) de stator correspondante au niveau d'une extrémité d'ouverture de la partie cylindrique (33a) correspondante sur un côté radialement extérieur du stator (31), et
le support (70) de capteur de température est monté sur la bride extérieure (33b) à partir d'un côté radialement extérieur du stator (31), la partie de mise en prise (73) de support correspondante étant en prise avec une extrémité de la bride extérieure (33b).

2. Procédé de montage de capteur de température selon la revendication 1, dans lequel
chacune des parties de mise en prise (73) de support comporte une patte de mise en prise (73n) qui fait saillie, et
la patte de mise en prise (73n) est en prise avec une extrémité de l'isolant (33) correspondant.

3. Procédé de montage de capteur de température selon la revendication 2, dans lequel
chacune des parties de mise en prise (73) de support comporte un élément saillant (73p) formé plus près du bras (72) correspondant par rapport à la patte de mise en prise (73n), l'élément saillant (73p) faisant saillie dans une direction identique à celle de la patte de mise en prise (73n), et
la patte de mise en prise (73n) est en prise avec une extrémité de l'isolant (33) correspondant positionnée entre la patte de mise en prise (73n) et l'élément saillant (73p).

4. Procédé de montage de capteur de température selon la revendication 2 ou 3, dans lequel les bras (72) s'étendent à partir de la partie de maintien (71) de capteur du support (70) de capteur de température, respectivement, dans des directions opposées l'une à l'autre, et chacune des parties de mise en prise (73) de support est disposée sur une extrémité extérieure du bras (72) correspondant.

5. Procédé de montage de capteur de température selon la revendication 4, dans lequel la patte de mise en prise (73n) d'au moins l'une des paires de parties de mise en prise (73) de support présente une surface inclinée (73s), effilée vers une extrémité avant dans une direction perpendiculaire à une direction de saillie de la patte de mise en prise (73n).

6. Procédé de montage de capteur de température selon la revendication 1, dans lequel la bride extérieure (33b) de chacun des isolants (33) est pourvue d'une saillie de positionnement (33bL, 33bR) qui dépasse vers l'extérieur dans une direction radiale du stator (31) et limite le mouvement du support (70) de capteur de température dans une direction axiale de l'arbre d'entraînement rotatif (45).

7. Procédé de montage de capteur de température selon la revendication 1 ou 6, dans lequel la bride extérieure (33b) de chacun des isolants (33) présente une ouverture (33bh) à travers laquelle la bobine (34) de stator est exposée, et
lorsque le support (70) de capteur de température est monté sur la bride extérieure (33b), le capteur de température (60) maintenu par la partie de maintien (71) de capteur pénètre dans l'ouverture (33bh) et est mis en contact à pression avec la bobine (34) de stator.

8. Procédé de montage de capteur de température selon l'une quelconque des revendications 1 à 7, dans lequel
la partie incurvée (72c) de chacun des bras (72) du support (70) de capteur de température est incurvée de manière à s'étendre vers l'extérieur dans une direction radiale du stator (31), et
le capteur de température (60) maintenu par la partie de maintien (71) de capteur est mis en contact à pression avec la bobine (34) de stator par une force élastique de la partie incurvée (72c) de chacun des bras (72) vers l'intérieur du stator (31) dans une direction radiale.

9. Procédé de montage de capteur de température selon la revendication 8, dans lequel le moteur (30) est monté sur un véhicule avec l'arbre d'entraînement rotatif (45) orienté dans une direction horizontale.

10. Support (70) de capteur de température configuré pour monter un capteur de température (60), qui mesure une température de l'une d'une pluralité de bobines (34) de stator, sur un moteur (30), le moteur (30) comportant un stator (31) qui comprend la pluralité de bobines (34) de stator enroulées chacune autour d'un noyau (32) de stator correspondant par l'intermédiaire d'un isolant (33) correspondant et un rotor (41) qui maintient un aimant (44) et qui est supporté à l'intérieur du stator (31) conjointement avec un arbre d'entraînement rotatif (45) de manière rotative, le support (70) de capteur de température comprenant :
une partie de maintien (71) de capteur qui est configurée pour maintenir le capteur de température (60) ;
une paire de parties de mise en prise (73) de support en prise avec le moteur (30) ; et
une paire de bras (72) présentant chacun une partie incurvée (72c) correspondante reliant la partie de maintien (71) de capteur et la partie de mise en prise (73) de support correspondante, dans lequel
chacun des isolants (33) comporte une partie cylindrique (33a) située entre le noyau (32) de stator correspondant et la bobine (34) de stator correspondante, et présente une bride extérieure (33b) formée le long de la bobine (34) de stator correspondante à une extrémité d'ouverture de la partie cylindrique (33a) correspondante sur un côté radialement extérieur du stator (31),
les bras (72) s'étendent respectivement à partir de la partie de maintien (71) de capteur, dans une direction circonférentielle du stator (31) opposée l'une à l'autre, et
le support (70) de capteur de température est monté sur la bride extérieure (33b) à partir d'un côté radialement extérieur du stator (31), les parties de mise en prise (73) de support étant disposées sur des extrémités extérieures périphériques des bras (72) correspondants, chacune étant en prise avec une extrémité correspondante de la bride extérieure (33b).

11. Support (70) de capteur de température selon la revendication 10, dans lequel
la bride extérieure (33b) de chacun des isolants (33) est pourvue d'une saillie de positionnement (33bL, 33bR) qui dépasse vers l'extérieur dans une direction radiale du stator (31) et limite le mouvement du support (70) de capteur de température dans une direction axiale de l'arbre d'entraînement rotatif (45).

12. Support (70) de capteur de température selon la revendication 10 ou 11, dans lequel
la bride extérieure (33b) de chacun des isolants (33) présente une ouverture (33bh) à travers laquelle la bobine (34) de stator est exposée, et
lorsque le support (70) de capteur de température est monté sur la bride extérieure (33b), le capteur de température (60) maintenu par la partie de maintien (71) de capteur pénètre dans l'ouverture (33bh) et est mis en contact à pression avec la bobine (34) de stator.
